# EUROPÄISCHE PATENTSCHRIFT

(11) **EP 0 682 595 B1**
(45) Veröffentlichungstag und Bekanntmachung des Hinweises auf die Patenterteilung: **06.11.1996**
(21) Anmeldenummer: 94904916.7
(22) Anmeldetag: 02.02.1994
(51) Int. Cl.: B29C 47/68, B01D 29/03, B01D 29/54, B01D 29/64

(54) **FILTERVORRICHTUNG FÜR FLUIDE, INSBESONDERE FÜR THERMOPLASTISCHES KUNSTSTOFFFLUID**
FILTER DEVICE FOR FLUIDS, ESPECIALLY THERMOPLASTIC FLUIDS
DISPOSITIF FILTRANT POUR FLUIDES, NOTAMMENT POUR FLUIDES THERMOPLASTIQUES

(30) Priorität: 04.02.1993 AT 195/93; 19.10.1993 AT 21059/93; 19.10.1993 AT 21069/93
(43) Veröffentlichungstag der Anmeldung: 22.11.1995
(73) Patentinhaber: BACHER, Helmut, A-4490 St. Florian (AT); SCHULZ, Helmuth, A-4490 St. Florian (AT); WENDELIN, Georg, A-4033 Linz (AT)
(72) Erfinder: BACHER, Helmut, A-4490 St. Florian (AT); SCHULZ, Helmuth, A-4490 St. Florian (AT); WENDELIN, Georg, A-4033 Linz (AT)
(74) Vertreter: Wildhack, Helmut, Dr. Dipl.-Ing.
(86) Internationale Anmeldenummer: AT9400012
(87) Internationale Veröffentlichungsnummer: WO9417981

(56) Entgegenhaltungen:
- DE-A- 2 324 581
- DE-A- 3 335 949
- FR-A- 1 356 496
- GB-A- 640 276
- US-A- 3 361 263
- US-A- 4 657 636

## Beschreibung

Die Erfindung bezieht sich auf eine Filtervorrichtung für Fluide, insbesondere für thermoplastisches Kunststofffluid, mit kontinuierlicher Reinigung der Filterfläche, mit einem Gehäuse für ein feststehendes, metallisches, im wesentlichen ebenes Filter, dem das zu filtrierende Fluid durch zumindest einen Zustromkanal zugeführt wird und von welchem das gereinigte Fluid durch zumindest einen Abstromkanal aus dem Gehäuse abgeleitet wird, wobei zumindest ein mit mehreren, in einer gemeinsamen Ebene liegenden, gekrümmten Bahnen folgenden, Schabkanten ausgebildeter Schaber vorgesehen ist, für dessen Verdrehung zumindest ein Antrieb vorhanden ist, so daß der Schaber über die zustromseitige Fläche des Filters streicht und hiebei die daran anhaftenden Verunreinigungen abstreift und zum Zentrum des Filters fördert, von wo die Verunreinigungen durch zumindest einen von dort ausgehenden, aus dem Gehäuse herausführenden Abfuhrkanal mittels zumindest einer Schnecke abtransportiert werden.

Eine bekannte kontinuierlich arbeitende Filtervorrichtung für thermoplastisches Kunststofffluid hat als Filter zumeist eine im Gehäuse unverdrehbar festgelegte zylindrische Hülse (EP-A-411 163), die außen von dem als Spiralband ausgeführten, zur Rotation um seine Längsachse angetriebenen Schaber umgeben ist. Nachteilig hieran ist unter anderem, daß sich beim Ein- und Ausbau, z.B. zu Wartungszwecken, aufgrund der Baulänge der Filterronde Probleme ergeben, insbesondere bei größeren Einheiten. Die Filterhülse besteht ja aus dünnem Blech und ist daher relativ weich. Beim axialen Aus- bzw. Einbau einer solchen Filterhülse lassen sich daher Verformungen nicht vermeiden, insbesondere als Folge des an der Filterhülse mit Reibung anliegenden Schabers. Um die nötige Durchlässigkeit der Filteröffnungen zu gewährleisten, müssen diese Öffnungen auf der Außenseite der Filterhülse einen größeren Durchmesser aufweisen als an der Innenseite. Solche Öffnungen lassen sich wirtschaftlich nur mit Lasern herstellen, was zur Folge hat, daß die Einarbeitung dieser Bohrungen am ebenen Filterelement erfolgt, welches nach Herstellung der Bohrungen eingerollt und an der Stoßstelle verschweißt wird. Dies macht die notwendige Genauigkeit schwer erzielbar. Eine Herstellung der Filteröffnungen nach Einrollen der Hülse ist nicht möglich, da das Lasergerät in die Hülse nicht einzubringen ist. Ein weiterer Nachteil besteht in einer mangelnden Betriebssicherheit. Diese ergibt sich daraus, daß das Spiralband - je nach seiner Drehrichtung - dazu neigt, sich entweder an der Filterhülse festzuklemmen oder diese nur lose zu umgeben. Im ersteren Fall besteht zumindest der Nachteil eines erhöhten Energiebedarfes zur Überwindung der auftretenden Reibungskräfte, wenn es nicht sogar zu einem Betriebsstillstand oder einem Aufreißen des Filterelementes kommt. Im zweiten Fall liegt der Schaber nicht mehr genügend sicher am Filter an und kann daher die sich an der Außenseite das Filters ansammelnden Verunreinigungen nicht mehr verläßlich abführen.

Aus diesen Gründen wurde es bereits vorgeschlagen, eine kontinuierlich arbeitende Filtervorrichtung mit einem ebenen Sieb zu versehen (DE-A-3,335 949; DE-2,324.581) und in der im Oberbegriff des Anspruches 1 beschriebenen Weise oder ähnlich dazu auszubilden. Nachteilig an dieser bekannten Bauweise ist jedoch, daß sie sich nur für relativ geringe Durchsätze eignet. Der Grund hiefür liegt darin, daß die bei dieser bekannten Konstruktion verwendete ebene Siehplatte unter dem Druck des zugeführten verunreinigten Fluids, etwa 350 bar betragen kann, zu Verformungen neigt, so daß die Schabkanten des Schabers nicht mehr exakt an der zu reinigenden Oberfläche der Siebplatte anliegen. Es kommt daher bald zu einer Verschmutzung der Siebplatte und damit zu einer Betriebsunterbrechung. Ähnliche Nachteile gelten für weitere bekannte Vorrichtungen, bei denen zur Drehbewegung angetriebene Abstreifelemente in geringem Abstand von einem im Gehäuse fest eingespannten Filter angeordnet sind (GB-A 640 276) oder anstelle von Schabern Rührflügel vorgesehen sind (US-A 4 657 636), die ebenfalls im Abstand von unverdrehbar im Gehäuse angeordneten Siebplatten angeordnet sind. Eingespannte textile Filter (FR-A 1 356 496), die von rotierenden Schaberplatten gereinigt werden, wobei die Zufuhr der zu reinigenden Flüssigkeit im Achsbereich das Gehäuses erfolgt und die Abfuhr des Filtrates und der Verunreinigungen unter Einfluß von Vakuum am Umfang des Gehäuses, sind für hohe Drücke nicht verwendbar, insbesondere nicht für die Reinigung thermoplastischen Kunststoffmateriales.

Die Erfindung setzt sich zur Aufgabe, einseite den Durchsatz im Vergleich zu den bekannten Bauweisen wesentlich zu erhöhen, anderseits für eine verläßliche Reinigung das Filters zu sogen. Die Erfindung löst diese Aufgabe dadurch, daß das Filter von zumindest zwei parallel zueinander und im Abstand voneinander angeordneten Filterscheiben gebildet ist, zwischen die das Fluid vom Zustromkanal am äußeren Umfang der Filterscheiben eingeleitet wird und zwischen denen der auf beide Filterscheiben einwirkende Schaber angeordnet ist, wobei jede Schabkante des Schabers von mehreren, voneinander getrennten, jedoch entlang der Bahnen angeordneten und an die Filterscheiben angedrückten Schaberelementen gebildet ist, und wobei an den einander abgewendeten Seiten der Filterscheiben Sammelräume für das gereinigte Fluid vorgesehen sind, die mit dem Abstromkanal im Bereich das äußeren Umfangs der Filterscheiben verbunden sind. Die Anordnung zweier Filterscheiben verdoppelt die wirksame Filterfläche, ohne den Aufwand für Zuströmkanäle und Abströmkanäle zu vergrößern. Die Auflösung der Schabkanten des Schabers in mehrere Schaberelemente pro Bahn ermöglicht eine individuelle Anpassung dieser Schaberelemente an die im Betrieb auftretenden Verformungen des Filters, so daß gegenüber der zuletzt beschriebenen bekannten Vorrichtung die Reinigung des Filters wesentlich verbessert und dadurch die Standzeit bei wesentlich vergrößertem Durchsatz erhöht wird. Die erhöhte Sicherheit der Reinigung der beiden Filterscheiben durch die einzelnen Schaberelemente ermöglicht es auch, die wirksame Fläche der Filterscheiben wesentlich größer zu bemessen, als dies bei der zuletzt beschriebenen bekannten Konstruktion möglich war, auch wenn dies eine Verformung der Filterscheiben durch den Druck des zu filtrierenden Materiales zur Folge hat.

Gegenüber der zuerst beschriebenen bekannten Bauweise ergibt sich der Vorteil, daß die ebenen Filterscheiben wesentlich einfacher und damit genauer herstellbar sind als eine Filterhülse, da die Einrollung entfällt. Damit ist auch der Ein- und Ausbau des Filters in das bzw. aus dam Gehäuse erleichtert, ebenso wie Montage und Demontage bei Wartungsarbeiten. Da es nicht mehr zu einem Festklemmen des Schabers am Filter kommen kann, ergibt sich auch eine vergrößerte Betriebssicherheit.

Die Zufuhr des zu filtrierenden Materiales vom äußeren Umfang der Filterscheiben zwischen diese ermöglicht es auch, den Zustromkanal oder die Zuströmkanäle radial in Bezug auf die Achse des Filters anzuordnen, ebenso wie den Abstromkanal für das Filtrat bzw. die Abströmkanäle für dasselbe. Dadurch ist man bei der Anordnung der Zuleitung des zu filtrierenden Materiales freier als bei der zuletzt beschriebenen bekannten Konstruktion, bei welcher die Zuleitung in axialer Richtung des Filters erfolgt, so daß der Drehantrieb für einen die Schabkanten tragenden Staukörper von der zur Zuleitung des Materiales entgegengesetzten Seite der Vorrichtung her erfolgen muß.

Filter mit zwei parallel zueinander angeordneten Filterscheiben, denen das zu reinigende Fluid durch einen gemeinsamen Zufuhrkanal zugeleitet wird, sind für rückspülbare Konstruktionen, die ohne Schaber arbeiten, bekannt (US-A 3 361 263).

Gemäß einer bevorzugten Ausführungsform der Erfindung ist jeder Schaber mit einer Welle drehfest verbunden, die koaxial zu einer die Verunreinigungen abführenden Schnecke angeordnet und mit einem,vom Schneckenantrieb unabhängigen Antrieb verbunden ist. Auf diese Weise können die Schaberelemente mit einer anderen Drehzahl verdreht werden als die die Verunreinigungen abführende Schnecke, so daß man sich besser auf die jeweils vorliegenden Gegebenheiten einstellen kann.

Dadurch, daß beim Erfindungsgegenstand beide axiale Richtungen der Filtervorrichtung für die Antriebe frei sind, besteht im Rahmen der Erfindung auch die Möglichkeit, Anordung und Anzahl der die Verunreinigung austragenden Schnecken Varianten zu unterwerfen. So ist es im Rahmen der Erfindung möglich, zwei gleichachsige Schnecken in zwei Abfuhrkanälen vorzusehen, welche die Verunreinigungen nach einander entgegengesetzten Seiten abführen. Es können jedoch auch alle Verunreinigungen nach nur einer Seite abgeführt werden, entweder nur durch eine einzige Schnecke oder im Rahmen der Erfindung durch zwei Schnecken, die koaxial ineinander in einem gemeinsamen Abfuhrkanal angeordnet sind und die Verunreinigungen nach der gleichen Seite zu einer gemeinsamen Auslaßöffnung des Abfuhrkanals fördern.

Für die Ausbildung der einzelnen Schaberelemente bieten sich im Rahmen der Erfindung zwei besonders vorteilhafte Varianten an: Einerseits können erfindungsgemäß die Schaberelemente von Blechwinkeln gebildet sein, die mit jeweils einem Schenkel an einem gemeinsamen Schaberträger befestigt sind und mit dem anderen, die Schabkante bildenden Schenkel federnd an der Filterscheibe anliegen. Anderseits besteht eine besonders günstige Ausführungsform im Rahmen der Erfindung darin, jedes Schaberelement mit zumindest zwei Bolzen an einem Schaberträger zu befestigen, wobei die Bolzen in zugehörige Bohrungen mit Spiel eingreifen und wobei jedes Schaberelement an seiner der Filterscheibe zugewendeten Seite mit einer vorspringenden Schaberleiste versehen ist. Diese Bolzen können entweder im Schaberelement oder im Schaberträger festgespannt sein, wobei die zugehörigen Bohrungen im jeweils anderen Bauteil angeordnet sind. In jedem Fall können die Schaberelemente nicht von den Bolzen abgleiten, da sie ja an den Filterscheiben anliegen. Vielmehr werden die Schaberelemente automatisch vom Druck des zu filtrierenden Materiales gegen die Filterscheiben gedrückt, ohne daß hiefür gesonderte Federn erforderlich sind. Die vorspringende Schaberleiste bewirkt nämlich, daß die verbleibende, der Filterscheibe zugewendete Fläche des Schaberelementes kleiner ist als die gegenüber liegende Fläche des Schaberelementes. Der hohe Druck des zugeführten, zu filtrierenden Mediums bewirkt daher eine Andrückung jedes Schaberelementes an die benachbarte Filterscheibe, solange nur der Druck des zu filtrierenden Materiales anhält. Vorteilhaft ist hiebei, daß diese Verhältnisse über die Lebensdauer des betreffenden Schaberelementes praktisch unverändert aufrecht erhalten bleiben. Selbst wenn nämlich die Schaberleiste sich allmählich abnützt, so bleibt die durch den Druck des zu filtrierenden Materiales hervorgerufene Anpressung des Schaberelementes an die Filterscheibe erhalten, solange nur die Schaberleiste genügend von der benachbarten Oberflächenpartie des Schaberelementes vorsteht.

Wie bereits erwähnt, stellt sich die Anforderung, die von den Filterscheiben abgeschabten, gegen ihr Zentrum transportierten Verunreinigungen verläßlich abzutransportieren, um so stärker, je größer der Durchsatz der Filtervorrichtung ist. Die Verunreinigungen bilden zumeist eine verhältnismäßig kompakte Masse, welche mitunter auch größere Fremdkörper enthält, z.B. Drahtstücke, die sich zwischen die Filterscheibe und das Schaberelement einklemmen können und dadurch die Drehung des Schabers erschweren können. Außerdem treten bei größeren Durchsätzen bzw. großflächigen Filterscheiben erhebliche Scherkräfte auf, die bei der Drehung des Schabers überwunden werden müssen, was eine hohe Antriebsleistung erfordert, die noch dazu häufig nicht konstant ist, sondern in Abhängigkeit von der Art, Größe und Häufigkeit der Verunreinigungen unkontrollierbare Spitzen aufweist. Außerdem kommt es immer wieder vor, daß von der der Filtervorrichtung vorgeschalteten Plastifiziereinrichtung nur teilweise plastifizierte Materialteilchen angeliefert werden, was gleichfalls erhöhte Scherkräfte zur Folge hat. Um auch die Schwierigkeiten zu überwinden, ist gemäß einer Weiterbildung der Erfindung die Anordnung so getroffen, daß ein die Schaberelemente tragender Schaberträger mit von seinem Umfang ausgehenden Aussparungen und bzw. oder mit zwischen den Schaberelementen angeordneten Durchbrechungen versehen ist, wobei die Ränder dieser Aussparungen bzw. Durchbrechungen zumindest abschnittsweise mit auf das zugeführte Material einwirkenden Schneiden versehen sind. Diese Aussparungen bzw. Durchbrechungen bilden einerseits Freistellungen des Schaberträgers, so daß die Scherkräfte, welche auf das Kunststoffmaterial oder sonstige zu filtrierende Material wirken, herabgesetzt werden. Anderseits bewirken die an den Rändern dieser Aussparungen bzw. Durchbrechungen vorgesehenen Schneiden zugleich eine Zerkleinerung gröberer Verunreinigungen, und dies schon unmittelbar nach dem Zeitpunkt, zu welchem diese Verunreinigungen aus dem Zuströmkanal in den Umfangsbereich der betreffenden Filterscheibe gelangt sind. Je mehr diese Verunreinigungen zerkleinert werden, desto leichter läßt sich der Schaberträger drehen und desto leichter lassen sich die zerkleinerten Verunreinigungen gegen das Zentrum der betreffenden Filterscheibe fördern, wo sie in den Abfuhrkanal gelangen und abtransportiert werden. Dies trägt insbesondere für mineralische oder metallische Verunreinigungen wesentlich zur Verlängerung der Filterwechselintervalle bei, da größere, harte, scharfkantige Verunreinigungen beim Transport entlang der Filterscheibenfläche gegen die Austragsschnecke zu die Filteroberfläche zerkratzen können. Diese Gefahr wird umso geringer, je feiner diese größeren Verunreinigungen zerteilt werden, da verhältnismäßig kleine Verunreinigungsteilchen leichter zwischen benachbarten Schaberelementen Platz finden können als größere Teilchen.

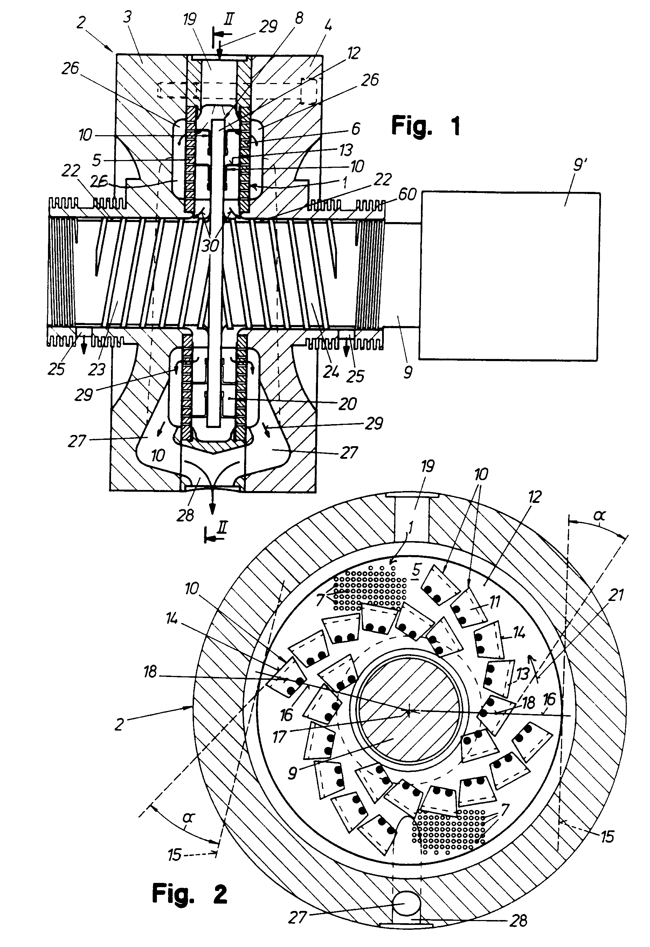

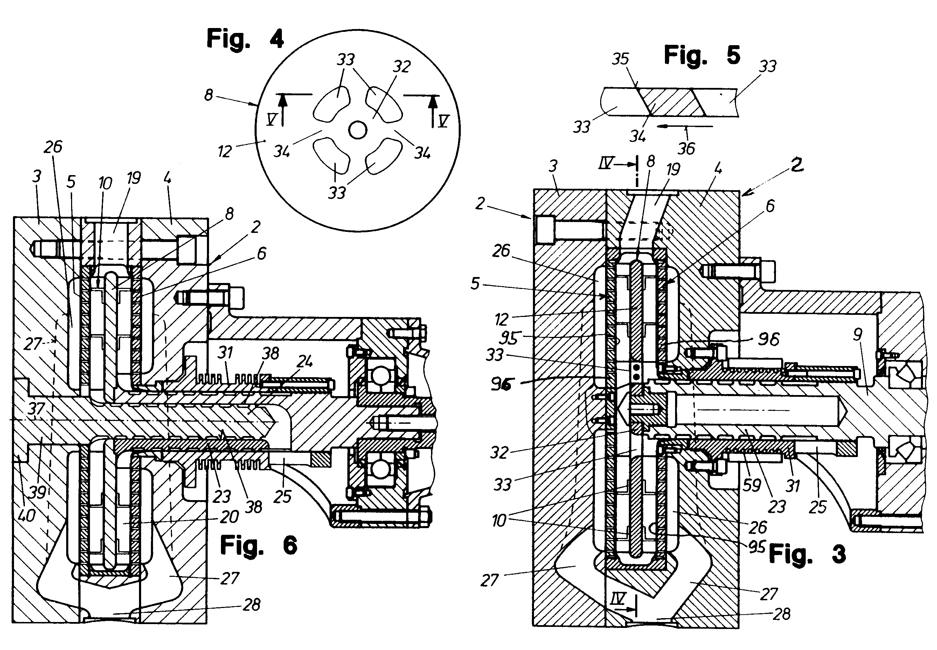

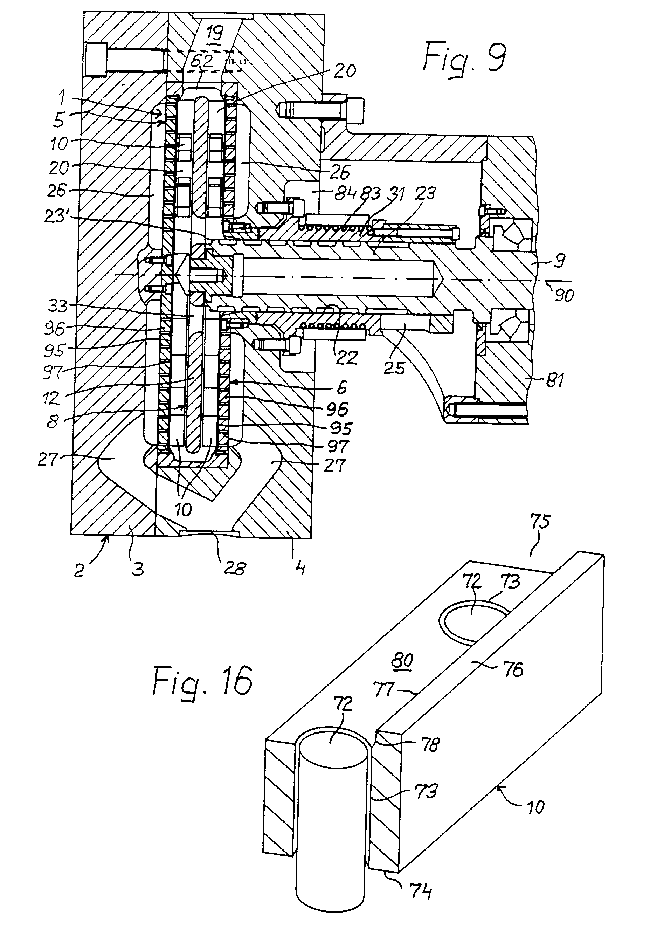

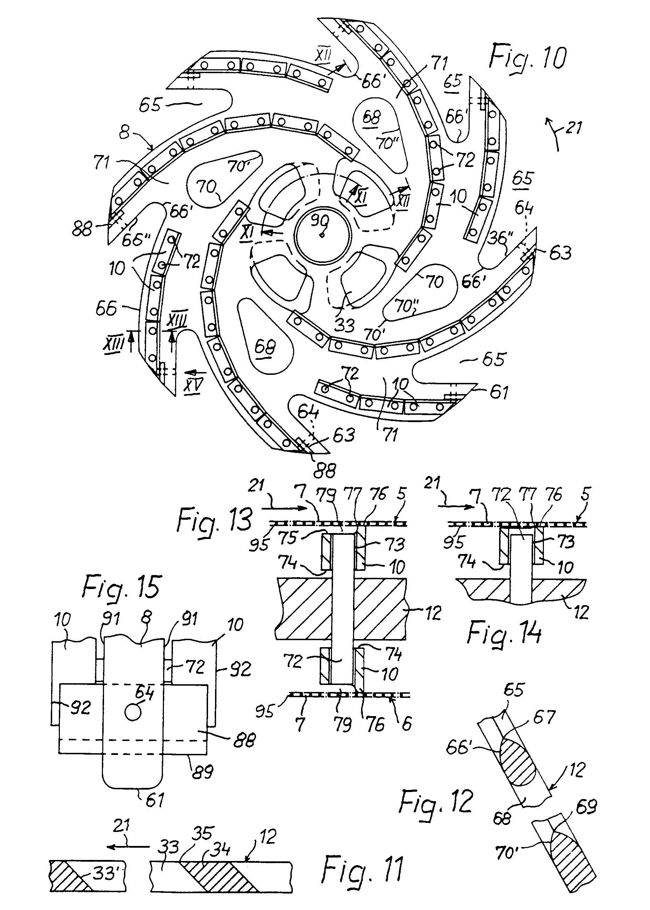

Weitere Kennzeichen und Vorteile der vorliegenden Erfindung ergeben sich aus der Beschreibung von Ausführungsbeispielen, die in der Zeichnung schematisch dargestellt sind. Fig.1 zeigt ein erstes Ausführungsbeispiel im Schnitt durch die Achse der Austragsschnecke. Fig.2 ist ein Schnitt nach der Linie II-II der Fig.1. Fig.3 zeigt ein zweites Ausführungsbeispiel im Schnitt. Fig.4 zeigt ein Detail im Schnitt nach der Linie IV-IV der Fig.3. Fig.5 ist ein Schnitt nach der Linie V-V der Fig.4. Die Fig.6 bis 9 zeigen jeweils ein weiteres Ausführungsbeispiel im Schnitt ähnlich Fig.1 bzw. Fig.3. Fig. 10 zeigt den Schaberträger der Ausführungsform nach Fig.9 in Seitenansicht. Die Fig. 11, 12 und 13 sind Schnitte nach den Linien XI-XI bzw. XII-XII bzw. XIII-XIII der Fig.10, jeweils in größerem Maßstab. Die Fig.14 zeigt ein Detail der Fig.13 nach längerer Betriebszeit. Die Fig. 15 zeigt eine Ansicht in Richtung des Pfeiles XV der Fig.10 in größerem Maßstab und Fig.16 zeigt die Befestigung eines Schaberelementes in axonometrischer Ansicht, teilweise im Schnitt.

Bei der Ausführungsform nach den Fig.1 und 2 hat die Filtervorrichtung ein Gehäuse 2, das aus zwei voneinander trennbaren Bauteilen 3,4 besteht, die miteinander verschraubt sind, so daß die im Inneren des Gehäuses 2 befindlichen Bauteile einfach montiert bzw. demontiert werden können. Diese Innenbauteile umfassen im wesentlichen ein Filter 1 in Form zweier Filterscheiben 5,6, die parallel und im Abstand voneinander an den beiden Gehäusehälften 3,4 befestigt, z.B. angeschraubt sind. Jede Filterscheibe 5,6 ist von einer Kreisringscheibe gebildet und hat eine Vielzahl von Durchgangsöffnungen 7 (Fig.2) für das Filtrat. Zwischen den beiden Filterelementen 5,6 ist ein Schaber 8 angeordnet, der einen Schaberträger 12 in Form einer Kreisringscheibe aufweist, die auf eine Schneckenwelle 9 aufgesetzt und mit dieser drehfest verbunden ist. Die Schneckenwelle 9 wird von einem Antrieb 9' beliebiger Bauart zur Rotation angetrieben, zweckmäßig mit veränderbarer Drehzahl. Auf den beiden Seiten des scheibenförmigen Schaberträgers 12 sitzen jeweils eine Vielzahl von segmentartigen Schaberelementen 10, deren jedes aus einem Blechwinkel besteht, dessen einer Schenkel 11 an der Platte des Schaberträgers 12 festgeschraubt ist. Der andere Schenkel 13 jedes Schaberelementes 10 steht von der Ebene des Schaberträgers 12 ab, z.B. im rechten Winkel und bildet mit seinem der jeweiligen Filterscheibe 5 bzw. 6 zugewendeten Ende eine Schabkante 14, die an der jeweiligen Filterscheibe 5,6 elastisch anliegt. Die einzelnen Schaberelemente 10 sind entlang spiralförmiger Bahnen so am Schaberträger 12 angeschraubt, daß die geradlinigen Schabkanten 14 mit der jeweils zugehörigen Tangentialen 15 (Fig.2) einen Winkel α einschließen, der von Null verschieden ist. Die jeweils zugehörige Tangentiale 15 ist hiebei jene Tangentiale an den kreisförmigen Umfang des Schaberträgers 12, welche zu jenem Radius 16 gehört, der vom Mittelpunkt 17 des Schabers 8 durch den Mittelpunkt 18 des jeweiligen Schaberelementes 10 geht (Fig.2). Wie Fig.2 zeigt, ist dieser Winkel α nicht konstant, er wird vielmehr umso größer, je näher das betreffende Schaberelement 10 zum Mittelpunkt 17 liegt.

Das zu filtrierende Fluid, in der Regel eine thermoplastische Kunststoffschmelze, wird in das Gehäuse 2 durch einen Zustromkanal 19 eingeführt, der radial in Bezug auf die Achse der Welle 9 mittig in den Raum 20 zwischen den beiden Filterscheiben 5,6 mündet. In diesem Raum 20 dreht sich der Schaber 8 in Richtung des Pfeiles 21 (Fig.2) derart, daß die Verschmutzungen der zugeführten Kunststoffschmelze, welche die Durchgangsöffnungen 7 nicht passieren können und daher an der dem Schaber 8 zugewendeten Seite der jeweiligen Filterscheibe 5,6 zurückbleiben, durch die Schabkanten 14 der Schaberelemente 10 allmählich im Raum 20 gegen den Mittelpunkt 17 zu transportiert werden. Die innersten Schaberelemente 10 reichen hiebei mit ihren Schabkanten 14 bis fast zu zwei koaxial zur Achse der Welle 9 angeordneten Abfuhrkanälen 22, welche an ihrer dem Schaber 8 zugewendeten Seite mit dem Raum 20 in Verbindung stehen und in deren jedem eine Schnecke 23,24 angeordnet ist, die von Schneckengängen auf der Welle 9 gebildet ist. Die Steigungen der beiden Schnecken 23,24 sind einander entgegengesetzt, so daß bei entsprechender Drehrichtung der Welle 9 die beiden Schnecken 23,24 die aus dem Raum 20 ankommenden Verunreinigungen erfassen und in dem jeweiligen Abfuhrkanal 22 zu einer Auslaßöffnung 25 führen, wo die Verunreinigungen aus dem Gehäuse 2 austreten. An diese Öffnungen 25 können Auffangbehälter od.dgl. angeschlossen sein.

Die reine Kunststoffschmelze, welche die Durchgangsöffnungen 7 der jeweiligen Filterscheibe 5,6 durchsetzt hat, gelangt auf einen an der anderen Seite der Filterscheibe 5,6 liegenden Sammelraum 26, welcher sich hinter der jeweiligen Filterscheibe 5,6 über die gesamte von den Durchgangsöffnungen 7 besetzte Fläche desselben erstreckt und die Schneckenwelle 9 ringförmig umgibt. An der dem Zustromkanal 19 entgegengesetzten Seite des Gehäuses 2 steht der Sammelraum 26 mit zwei Verbindungskanälen 27 in Verbindung, welche in einen gemeinsamen, radial zur Schneckenwelle 9 gerichteten Abstromkanal 28 münden, durch welchen die gereinigte Schmelze aus dem Gehäuse 2 austritt. An diesen Abstromkanal 28 kann ein geeignetes Werkzeug, z.B. ein Extruderkopf oder eine Form, angeschlossen sein.

Die Richtung der in den Kanälen 19,27,28 bzw. im Raum 20 und in den Sammelräumen 26 strömenden Schmelze ist durch Pfeile 29 angedeutet, die Richtung der aus dem mittigen Raum 20 in die beiden Abfuhrkanäle 22 eintretenden Verunreinigungen durch Pfeile 30. Wie ersichtlich, strömt die Kunststoffschmelze im wesentlichen in einer Richtung durch das Gehäuse 2, welche normal steht auf die Achsrichtung der Schneckenwelle 9. Dadurch sind beide Enden der Schneckenwelle 9 frei für die Anordnung des Antriebes 9'. Gegebenenfalls können mehrere Zuströmkanäle 19 und bzw. oder mehrere Abströmkanäle 28 vorgesehen sein, vorzugsweise sternförmig in Bezug auf die Achse der Schneckenwelle 9 angeordnet.

Der von den beiden Filterscheiben 5,6 begrenzte Raum 20, in welchem der Schaber 8 umläuft, ist bis auf den Zustromkanal 19 und den Abstromkanal 28 sowie die Durchgangsöffnungen 7 für das Filtrat dicht abgeschlossen, so daß keine Verluste an zu filtrierendem Material bzw. an Filtrat auftreten und auch sicher vermieden ist, daß unfiltriertes Material hinter die Filterscheiben 5,6 gelangen kann. Durch die federnde Anlage der die Schaberelemente 10 bildenden Blechwinkel an den Filterscheiben 5,6 wird die zur Abfuhr der Verunreinigungen nötige Schabwirkung stets aufrecht erhalten, auch wenn sich die Filterscheiben 5,6 durch den Druck des über den Zustromkanal 19 zugeführten zu filtrierenden Materiales durchbiegen. Diese Durchbiegung kann gemildert werden durch gelochte Stützplatten, welche hinter den Filterscheiben 5,6, gesehen in Strömungsrichtung des Filtrates, angeordnet sind. In der Regel ist der Durchmesser der Löcher dieser Stützplatte wesentlich größer als der Durchmesser der sehr feinen Durchgangsöffnungen 7.

Die Ausführungsform nach den Fig.3 bis 5 unterscheidet sich von jener nach den Fig.1,2 vor allem dadurch, daß der Austrag der von dem Schaber 8 von den beiden Filterscheiben 5,6 abgekratzten und zum Zentrum des Schabers 8 hin transportierten Verunreinigungen nur durch eine einzige Schnecke 23 zu einer einzigen Auslaßöffnung 25 erfolgt, die nach unten vom Gehäuse 31 der Schnecke 23 ins Freie oder zu einem Sammelraum für die Verunreinigungen führt. Das Schneckengehäuse 31 ist seitlich an den rechten Gehäusebauteil 4 mit Schrauben angeflanscht. Am Stirnende der Schneckenwelle 9, deren Antrieb nicht dargestellt ist, ist eine Nabe 32 des Schabers 8 drehschlüssig befestigt, so daß sich der Schaber 8 mit der Schneckenwelle 9 mitdreht. Die Schaberelemente 10 sind hier der besseren Deutlichkeit halber nicht eingezeichnet. Sie sind wie beim Ausführungsbeispiel nach den Fig.1 und 2 beschrieben, auf dem Schaberträger 12 angeordnet und arbeiten daher analog. Die in Richtung zur Nabe 32 des Schabers 8 transportierten Verunreinigungen treten auf der rechten Seite des Schabers 8 aus dem Raum 20 unmittelbar in die ersten Gänge 23' der Schnecke 23 ein, da diese Schneckengänge 23' sich bis in den Raum zwischen den beiden Filterelementen 5,6 erstrecken. Die von der linken Filterscheibe 5 abgeschabten Verunreinigungen gelangen am Außenumfang der Nabe 32 zu von Durchbrüchen gebildeten Durchlaßöffnungen 33, durch welche die Verunreinigungen von der linken Seite des Schabers 8 auf die rechte Seite desselben gelangen und dort von den ersten Gängen 23' der Schnecke 23 erfaßt werden. Zwischen je zwei Durchlaßöffnungen 33 liegt ein Steg 34 (Fig.4), der einen Förderflügel für die Verunreinigungen bildet, so daß diese im Raum 20 von links nach rechts (gesehen in Fig.3) zur Schnecke 23 transportiert werden. Zweckmäßig sind diese Förderflügel 34 mit scharfen, auf die Verunreinigungen einwirkenden Schneiden 35 (Fig.5) versehen, welche auf die Verunreinigungen zerkleinernd einwirken, so daß die Verunreinigungen aufgelockert zur Schnecke 23 gelangen und dadurch leichter erfaßt werden können. Die Umlaufrichtung der Stege 34 ist in Fig.5 durch einen Pfeil 36 angedeutet.

Die Ausführungsform nach Fig.6 hat ebenfalls stehende, ortsfeste Filterelemente 5,6, zwischen denen mittig im Raum 20 ein sich um die horizontale Achse 37 drehender Schaber 8 angeordnet ist. Die Abfuhr der von den beiden Filterscheiben 5,6 abgekratzten Verunreinigungen erfolgt ebenfalls durch eine einzige, unten rechts am Schneckengehäuse 31 angeordnete Auslaßöffnung 25, jedoch erfolgt der Transport der Verunreinigungen zum Unterschied von der Ausführungsform nach den Fig.3 bis 5 nicht durch eine einzige Schnecke 23, sondern durch zwei koaxial ineinander angeordnete Schnecken 23,24, welche beide zur Auslaßöffnung 25 fördern. Die äußere Schnecke 23 ist hiebei im wesentlichen so angeordnet und angetrieben, wie dies in Fig.3 dargestellt ist, d.h., sie reicht mit den am weitesten links befindlichen Schneckengängen bis in den Raum 20 und nimmt von dort die von der rechten Filterscheibe 6 abgeschabten Verunreinigungen auf. Die innere Schnecke 24 ist in einer zur Achse 37 koaxialen Bohrung 38 gelagert, welche an ihrem rechten Ende mit der Auslaßöffnung 25 in Verbindung steht. Das linke Ende der inneren Schnecke 24 ragt mit seinen letzten Schneckengängen durch eine mittige Öffnung 38 des Schabers 8 hindurch in den zur linken Seite des Schabers 8 liegenden Teils des Raumes 20, von wo diese Schnecke 24 die Verunreinigungen nach rechts zur Auslaßöffnung 25 führt. Die Welle 39 der Schnecke 24 ist mittels eines Flansches 40 mit einem nicht dargestellten Antrieb zur Drehung der Schnecke 24 um die Achse 37 verbunden. Die Drehzahl der Schnecke 24 kann, doch muß nicht, gleich sein jener der Schnecke 23.

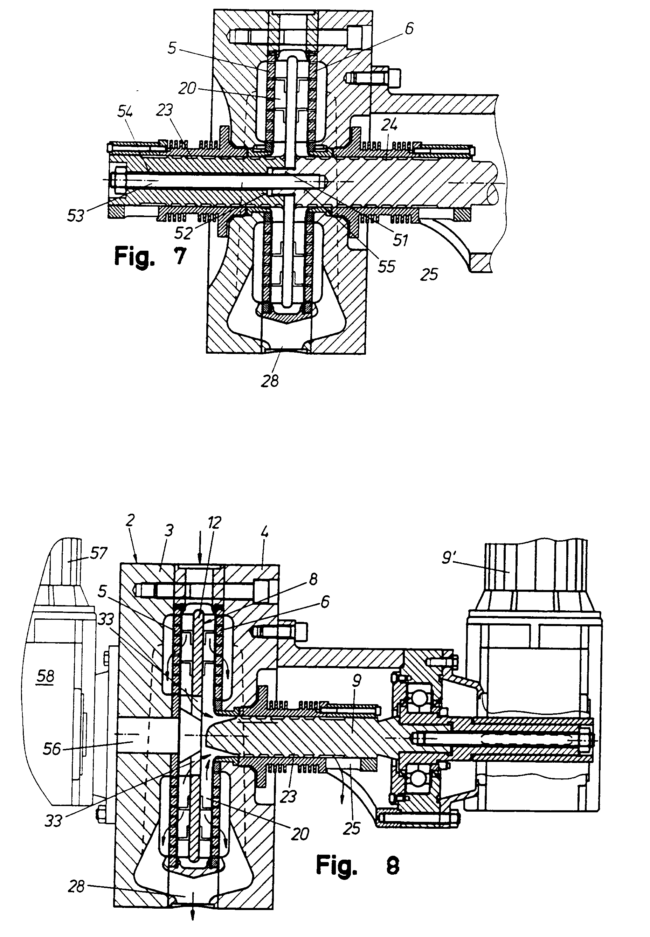

Die Ausführungsform nach Fig. 7 ähnelt jener nach Fig.1, jedoch ist die Schneckenwelle 9, welche für die beiden Schnecken 23,24 gemeinsam ist, zweiteilig ausgebildet. Der in Fig.9 rechts liegende, der Schnecke 24 zugehörige Teil der Schneckenwelle 9 ragt mit einem Fortsatz 51 in eine entsprechende Ausnehmung 52 des linken Schneckenwellenteiles hinein. Der Fortsatz 51 ist mit einem Außengewinde versehen, das in ein Innengewinde der Ausnebmung 52 eingeschraubt ist. Zweckmäßig ist die Steigung dieses Gewindes so gewählt, daß sich diese Gewindeverbindung bei Drehung der Schneckenwelle 9 festzuziehen trachtet. Zusätzlich hiezu ist eine Sicherung durch einen Gewindebolzen 53 gegeben, der durch eine mittige Bohrung 54 des linken Schneckenwellenteiles hindurchgesteckt und in eine Gewindebohrung 55 am Stirnende des rechten Schneckenwellenteiles eingeschraubt ist. Die beiden Schnecken 23,24 fördern die abgeschabten Verunreinigungen nach links bzw. rechts vom zwischen den beiden Filterscheiben 5,6 liegenden Raum 20 weg zu den beiden Auslaßöffnungen 25.

Die Ausführungsform nach Fig. 8 ähnelt jener nach Fig.3 insofern, als die von den Filterscheiben 5,6 durch die Schaberkörper 10 abgeschabten Verunreinigungen mittels einer einzigen Schnecke 23 zu einer seitlich rechts der beiden Filterscheiben 5,6 liegenden Auslaßöffnung 25 transportiert werden. Wie bei Fig.3 ist auch bei der Ausführungsform nach Fig.8 der Schaberträger 12 mit im Kreis um sein Zentrum angeordneten Durchlaßöffnungen 33 versehen, so daß die vom linken Filterelement 5 gelösten Verunreinigungen auf die rechte Seite des Raumes 20 und damit zu den Gängen der Schnecke 23 gelangen können. Zum Unterschied von der Ausführungsform nach Fig.3 ist jedoch der Schaber 8 nicht mit der Welle 9 der Schnecke 23 drehschlüssig verbunden, sondern mit einer nach links aus dem Gehäuse 2 herausgeführten Welle 56, die von einem gesonderten Antrieb 57 über ein Regelgetriebe 58 angetrieben wird. Auf diese Weise ist es möglich, den Schaber 8 und die zum Austrag der Verunreinigungen dienende Schnecke 23 mit unterschiedlichen Drehzahlen anzutreiben, die vorzugsweise jeweils wählbar einstellbar sind. Dadurch ist es möglich, sich an unterschiedliche Eigenschaften des zu bearbeitenden Gutes bestmöglich anzupassen.

Für eine solche Anpassung ist es auch zweckmäßig, das Schneckengehäuse 31 nach Wunsch temperierbar auszubilden. Hiezu ist am Schneckengehäuse 31 zweckmäßig jeweils eine Heizung 59 (Fig.3), vorzugsweise in Form einer Heizwicklung, und bzw. oder eine Kühlvorrichtung 60 (Fig.1), z.B. in Form von Kühlrippen, Kühlschlangen od.dgl., vorgesehen. Dadurch läßt sich eine temperaturabhängige Beeinflussung der Menge des Schmutzaustrages erzielen.

Wie bereits erwähnt, ist es bei allen Ausführungsformen zweckmäßig, die Filterscheiben 5,6 an ihrem Außenumfang bzw. innen im Mittenbereich so dicht mit den sie tragenden Bauteilen zu verbinden, daß das zugeführte Fluid nicht unter Umgehung des jeweiligen Filterelementes in den dahinterliegenden Raum 20 bzw. 26 gelangen kann. Hiefür geeignete Einspannungen bzw. Befestigungen der Filterscheiben 5,6 an den erwähnten Bauteilen sind in den einzelnen Ausführungsbeispielen dargestellt.

Bei allen Ausführungsformen ist es zweckmäßig, die Filterscheiben 5,6 des Filters 1 so auszubilden, daß von Lochblechen 95 (Fig.3) gebildete Filtersiebe von Stützlochplatten 96 abgestützt sind. Die Löcher der Lochbleche 95 sind naturgemäß sehr fein, so daß ihre Herstellung zweckmäßig mittels Laserstrahl- oder Elektronenstrahlbohrgeräten erfolgt. Zweckmäßig sind diese Feinlöcher mit einem Konus ausgeführt, und zwar nach der Seite der Stützlochplatte 96 hin mit größerem Durchmesser.

An die Auslaßöffnung 25 für die Verunreinigungen kann ein Schmutzablaßhahn angeschlossen sein oder eine mit einer separat angetriebenen Schmutzförderschnecke versehene Abfuhrleitung.

In der Regel ist es günstig, die Filterscheiben 5,6 als Kreisringscheiben auszubilden, da sich auf diese Weise die den Schmutzaustrag bewirkende Schnecke mit ihren Schneckengängen bis in die Öffnung der Kreisringscheibe hinein anordnen läßt. Gegebenenfalls ist es jedoch auch möglich, einzelne Filterscheiben als volle Kreisscheiben auszubilden, wie z.B. Fig.5 für die Filterscheibe 5 zeigt. Eine solche Ausbildung ist auch z.B. für die linke Filterscheibe 5 in Fig.3 denkbar, wobei sich dann natürlich auch die Schabkanten 14 an der dieser Filterscheibe 5 zugewendeten Seite des Schabers 8 bis in den zentralen Bereich der Filterscheibe 5 erstrecken sollten. Im Bereich der Durchlaßöffnungen 33 könnten dann die Schaberelemente 10 von den Stegen 34 getragen sein.

Wie bereits erwähnt, müssen das Filter 1 und der Schaber 8 nicht unbedingt von ebenen Scheiben gebildet sein, wenngleich dies aus Gründen einer einfacheren Herstellungs- und Montageweise zweckmäßig ist, insbesondere bei zwei oder mehr einander parallel angeordneten Filtern. Es ist jedoch auch eine geringfügig kegelige oder konische Ausbildung der Filterscheiben 5,6 möglich, wobei dann die Form des Schaberträgers 12 bzw. die Lage der Schabkanten 14 entsprechend anzupassen ist. Die Abweichung einer solchen Kegel- oder Konusfläche von einer Ebene sollte jedoch nicht mehr als höchstens 5°, insbesondere weniger als 3° betragen. Dies bedeutet, daß der Öffnungswinkel des Kegels bzw. des Konus zumindest 170°, insbesondere zumindest 174° betragen sollte.

Die Ausführungsform nach den Fig.9 bis 16 ähnelt jener nach Fig.5, jedoch sind der Schaberträger 12 und die Schaberelemente 10 unterschiedlich zu Fig.5 ausgebildet. Zunächst sind, wie dies schon in ähnlicher Weise bei der Ausführungsform nach Fig. 5 der Fall war, die Ränder 33' der Durchlaßöffnungen 33 schräg in Bezug auf die horizontale Achse der Filtervorrichtung ausgebildet (Fig.11), so daß die scharfen Kanten 35 der Durchlaßöffnungen 33 beim Umlauf des plattenförmigen Schaberträgers 12 in Richtung des Pfeiles 21 eine Schneidwirkung auf die Verunreinigungen und durch die Schrägstellung der Ränder 33' auch eine Förderrichtung auf die Verunreinigungen in Richtung nach rechts (gesehen in Fig.9), also zur Schnecke 23 zu, ausüben. Wie bereits erwähnt, enthalten die Verunreinigungen aber mitunter gröbere Bestandteile, insbesondere Steinchen oder metallische Teilchen, z.B. Heftklammern oder Drahtstücke. Um diese Bestandteile der Verunreinigungen schon möglichst im Eintrittsbereich der Filtervorrichtung zu zerkleinern, also noch bevor diese Bestandteile der Verunreinigungen zu den Filterscheiben 5,6 gelangen, ist der Schaberträger 12 an seinem Umfang 61 mit auf das durch den Zuströmkanal 19 zugeführte, zu filtrierende Material einwirkenden Messern 88 (Fig.10,15) versehen. Die Schneiden 89 dieser Messer 88 verlaufen parallel zur Drehachse 90 (Fig.10) des Schabers 8 und stehen an den beiden normal auf diese Achse 90 verlaufenden, planen Seitenflächen 91 (Fig.15) über diese Seitenflächen vor, nicht jedoch über die wirksamen Oberflächen 92 der Schaberelemente 10. Die Schneiden 89 können auch geringfügig über den Umfang 61 des Schabers 8 vorstehen, insbesondere wenn der Zuströmkanal 19 in eine den Umfang des Schabers 8 umgeumgebende Ringnut 62 mündet, welche gleichsam eine Verbreiterung des Raumes 20 nach außen bildet. Bei der Umlaufbewegung des Schabers 8 in Richtung des Pfeiles 21 (Fig.10) werden diese gröberen bzw. starren Bestandteile der Verunreinigungen von den Schneiden 89 der Messer 88 erfaßt und zumindest einigermaßen zerkleinert. Jedes Messer 88 ist hiebei in einem vom Umfang 61 des Schabers 8 nach innen ausgehenden Spalt 63 (Fig. 10) gehalten und durch einen Bolzen 64 gesichert.

Der Schaberträger 12 trägt aber auch noch andere Elemente, welche zur Zerkleinerung von Anteilen der Feststoffe der Verunreinigungen beitragen. Hiezu ist die Platte des Schaberträgers 12 zusätzlich zu den Durchlaßöffnungen 33 mit von ihrem Umfang 61 nach innen ausgehenden Aussparungen 65 versehen, welche zwischen jeweils zwei Reihen der Schaberelemente 10 angeordnet sind. Die Ränder 66 dieser Aussparungen 65 sind zumindest in einigen Abschnitten mit Schneiden 67 (Fig.12) versehen. Solche Abschnitte sind insbesondeere der Grund 66' der Aussparungen 65, sowie jene Seitenränder 66'' (Fig.10), welche, in Umlaufrichtung 21 des Schabers 8 gesehen, nachlaufen. Die Schneiden 67 sind hiebei in Bezug auf die Dicke der Platte des Schabers 8 mittig angeordnet und im Allgemeinen so geformt, daß sie keine Färderwirkung in Richtung der Achse 90 auf die Verunreinigungen ausüben. Es kann jedoch in Sonderfällen erwünscht sein, diese Schneiden 67 auch ähnlich den Schneiden 35 der Durchlaßöffnungen 33 auszubilden, also mit einer Förderwirkung in Richtung der Achse 90.

In ähnlicher Weise, wie dies für die Aussparungen 65 beschrieben wurde, sind auch zusätzliche Durchbrechungen 68 der Platte des Schabers 8 mit Schneiden 69 versehen, welche auf das zugeführte Material einwirken, insbesondere auf gröbere Anteile der Verunreinigungen dieses Materiales. Diese Schneiden 69 (Fig.12) sind insbesondere an jenen Abschnitten 70' bzw. 70'' der Ränder 70 der Durchbrechungen 68 angeordnet, welche, in Umlaufrichtung 21 des Schabers 8 gesehen, nachlaufen. Diese Durchbrechungen 68 haben, in Richtung der Achse 90 gesehen, etwa birnenförmige Gestalt, wobei die breitere Seite der Öffnung, in Umlaufrichtung 21 gesehen, vorne liegt. Die schmälere Seite, welche mit den schneidenden Abschnitten 70' versehen ist, liegt hinten. Dadurch ergibt sich ein ziehender Schnitt der Schneiden 69 der Abschnitte 70' und 70'' auf die zu zerkleinernden Verunreinigungen.

Die Durchbrechungen 68 sind jeweils zwischen zwei bogenförmig gegen den achsnahen Bereich der Platte des Schabers 8 verlaufenden Bahnen der Schaberelemente 10 angeordnet. Es ist zweckmäßig, die Durchlaßöffnungen 33, die vom Rand des Schabers 8 ausgehenden Aussparungen 65 und die Durchbrechungen 68 so groß wie möglich zu bemessen. Die verbleibenden Stege 71 (Fig.10) der Platte des Schabers 8 müssen nur so stark bemessen werden, als es aus Festigkeitsgründen in Hinblick auf die zu überwindenden Scherkräfte und das daraus folgende einzubringende Drehmoment nötig ist.

Für die vom Schaber 8 auf die Filterscheiben 5,6 ausgeübte Schabwirkung zwecks Abkratzung der Verunreinigungen dienen eine Vielzahl von Schaberelementen 10, welche entlang gekrümmter Bahnen, die z.B. Spiralform aufweisen, an der Platte des Schaberträgers 12 befestigt sind, und zwar mittels zweier Bolzen 72 pro Schaberelement 10 (Fig.10,13,14). Die Achsen der Bolzen 72 verlaufen für jedes Schaberelement 10 parallel zueinander. Diese Bolzen 72 sind in der Platte des Schaberträgers 12 festgespannt und greifen in Bohrungen 73 der Schaberelemente 10 mit Spiel ein. Da die Schaberelemente 10 an den Filterscheiben 5 bzw. 6 anliegen (Fig.13), können die Schaberelemente 10 nicht von den Bolzen 72 abgleiten. Vielmehr werden die Schaberelemente 10 gegen die Filterscheiben 5,6 gedrückt. Dies könnte durch zwischengeschaltete Federn erfolgen, die in den Figuren 13,14 und 16 dargestellte Form der Schaberelemente 10 macht solche Federn jedoch überflüssig. Gemäß den Fig.13 und 16 ist jedes Schaberelement 10 an seiner dem Schaberträger 12 zugewendeten Fläche 74 eben ausgebildet, an seiner der betreffenden Filterscheibe 5 bzw. 6 zugewendeten Fläche hingegen mit einer Aussparung 75 versehen, derart, daß eine an der Filterscheibe 5 bzw. 6 anliegende Leiste 76 gebildet wird, die in Längsrichtung des Schaberelementes 10 verläuft und mit ihrer scharfen, vorlaufenden Kante 77 die Schabwirkung ausübt. Die der betreffenden Filterscheibe 5 bzw. 6 zugewendete, vom zu filtrierenden Material beaufschlagte Fläche an der Aussparung 75 ist daher kleiner als die gegenüberliegende Fläche 74 des Schaberelementes 10. Die vom unter Druck stehenden, durch den Zuströmkanal 19 zugeführten, zu filtrierenden Material auf die Flächen 74 und die Aussparung 75 ausgeübten Kräfte sind daher unterschiedlich groß, und zwar ist die auf die Fläche 74 wirkende Kraft größer als jene, welche über die Aussparung 75 auf das Filterelement 10 übertragen wird. Dadurch wird jedes Filterelement 10 vom zugeführten, zu filtrierenden Material umso stärker gegen das Lochblech 95 der benachbarte Filterscheibe 5,6 gedrückt, je größer der Druck des zugeführten zu filtrierenden Materiales ist. Die erwähnte Ausbildung der Schaberleiste 76 hat zur Folge, daß diese Verhältnisse für die Lebensdauer des betreffenden Schaberelementes 10 praktisch unverändert aufrecht erhalten bleiben. Selbst wenn nämlich die Schaberleiste 76 nach längerer Betriebszeit abgenützt wird, so bleiben die erwähnten Größenverhältnisse der beiden, vom Druck im zugeführten Material beaufschlagten Flächen 74,75 unverändert (Fig.14) und ebenso im wesentlichen unverändert bleibt die von der Schaberleiste 76 ausgeübte Schabwirkung, auch wenn nach starker Abnützung diese Schaberleiste 76 nur mehr eine geringe Höhe aufweist (Fig.14).

Aus herstellungsmäßigen Gründen geht die Schaberleiste 76 zweckmäßig über eine kleine Hohlkehle 78 in die Aussparung 75 über. Diese Hohlkehle 78 ändert jedoch die beschriebenen Verhältnisse nicht.

Die Schaberleiste 76 ist zweckmäßig an der in Bezug auf die Umlaufrichtung des Schaberträgers 12 (Pfeil 21, Fig.13,14) vorlaufenden Seite des betreffenden Schaberelementes 10 angeordnet, um zu vermeiden, daß sich in dem zwischen der Aussparung 75 und der betreffenden Filterscheibe 5 bzw. 6 gebildeten Freiraum 79 Verunreinigungen ansammeln können, wodurch die erwähnte Anpressung der Schaberelemente 10 an die Filterscheiben 5 bzw. 6 beeinträchtigt werden könnte. Die der Hohlkehle 78 folgende, die Aussparung 75 begrenzende Oberflächenpartie 80 des Schaberelementes 10 ist zweckmäßig eben.

Der Schaberträger 12 muß nicht von einer Platte im engeren Sinn gebildet sein. Vielmehr ist es z.B. möglich, den Schaberträger 12 als aus Einzelelementen zusammengesetztes Gestänge bzw. Gerüst auszubilden, welches die Schaberelemente 10 in der beschriebenen Weise trägt. Die einzelnen Elemente des Gestänges bzw. Gerüstes begrenzen dann die Durchlaßöffnungen 33 bzw. die Durchbrechungen 68 bzw. die Aussparungen 65.

Die Lagerung der Schnecke 23 und der sie antreibenden Welle erfolgt zweckmäßig in einem Anbau 81 an das Gehäuse 2, und auch das Schneckengehäuse 31 bildet einen vom Gehäuseteil 4 gesonderten, mit diesem verschraubten Bauteil, um die Schnecke leichter ein- bzw. ausbauen zu können. Das Schneckengehäuse 31 kann Temperierungseinrichtungen 83, z.B. eine Heizung und/oder eine Kühlung tragen, so daß die von der Schnecke 23 abtransportierten Verunreinigungen auf der gewünschten Temperatur gehalten werden können. Um diese Temperierungseinrichtungen 83 möglichst nahe an die Stelle heranzubringen, an welcher die Verunreinigungen von der Schnecke 23 erfaßt werden, ist der Gehäuseteil 4 mit einer Aussparung 54 versehen.

Wenn sich die vorliegende Erfindung auch insbesondere für die Filterung thermoplastischer Kunststoffschmelzen eignet, so ist die Filterung anderer Materialien, welche Verunreinigungen mit sich führen, ebenso möglich, z.B. die Filterung von Fruchtsäften, Speiseölen usw.

## Patentansprüche

1. Filtervorrichtung für Fluide, insbesondere für thermoplastisches Kunststofffluid, mit kontinuierlicher Reinigung der Filterfläche, mit einem Gehäuse (2) für ein feststehendes, metallisches, im wesentlichen ebenes Filter (1), dem das zu filtrierende Fluid durch zumindest einen Zustromkanal (19) zugeführt wird und von welchem das gereinigte Fluid durch zumindest einen Abstromkanal (28) aus dem Gehäuse (2) abgeleitet wird, wobei zumindest ein mit mehreren, in einer gemeinsamen Ebene liegenden, gekrümmten Bahnen folgenden, Schabkanten (14) ausgebildeter Schaber (8) vorgesehen ist, für dessen Verdrehung zumindest ein Antrieb (9') vorhanden ist, so daß der Schaber (8) über die zustromseitige Fläche des Filters (1) streicht und hiebei die daran anhaftenden Verunreinigungen abstreift und zum Zentrum des Filters (1) fördert, von wo die Verunreinigungen durch zumindest einen von dort ausgehenden, aus dem Gehäuse (2) herausführenden Abfuhrkanal (22) mittels zumindest einer Schnecke (23,24) abtransportiert werden, dadurch gekennzeichnet, daß das Filter (1) von zumindest zwei parallel zueinander und im Abstand voneinander angeordneten Filterscheiben (5,6) gebildet ist, zwischen die das Fluid vom Zustromkanal (19) am äußeren Umfang der Filterscheiben (5,6) eingeleitet wird und zwischen denen der auf beide Filterscheiben (5,6) einwirkende Schaber (8) angeordnet ist, wobei jede Schabkante (14) des Schabers (8) von mehreren, voneinander getrennten, jedoch entlang der Bahnen angeordneten und an die Filterscheiben (5,6) angedrückten Schaberelementen (10) gebildet ist und wobei an den einander abgewendeten Seiten der Filterscheiben (5,6) Sammelräume (26) für das gereinigte Fluid vorgesehen sind, die mit dem Abstromkanal (28) im Bereich des äußeren Umfanges der Filterscheiben (5,6) verbunden sind.

2. Filtervorrichtung nach Anspruch 1, dadurch gekennzeichnet, daß jeder Schaber (8) mit einer Welle (56) drehfest verbunden ist, die koaxial zu einer die Verunreinigungen abführenden Schnecke (23) angeordnet und mit einem vom Schneckenantrieb (9') unabhängigen Artrieb (57) verbunden ist. (Fig.8)

3. Filtervorrichtung nach Anspruch 1 oder 2, dadurch gekennzeichnet, daß zwei gleichachsige Schnecken (23,24) vorhanden sind, welche die Verunreinigungen nach einander entgegengesetzten Seiten abführen. (Fig.1,7)

4. Filtervorrichtung nach Anspruch 1 oder 2, dadurch gekennzeichnet, daß zwei koaxial ineinander in einem gemeinsamen Abfuhrkanal (22) angeordnete Schnecken (23,24) die Verunreinigungen nach der gleichen Seite zu einer gemeinsamen Auslaßöffnung (25) des Abfuhrkanales (22) fördern. (Fig.6)

5. Filtervorrichtung nach einem der Ansprüche 1 bis 4, dadurch gekennzeichnet, daß zumindest ein Schaber (8) mit zumindest einer im Mittenbereich angeordneten Durchlaßöffnung (33) für Verunreinigungen versehen ist (Fig.3,8)

6. Filtervorrichtung nach Anspruch 5, dadurch gekennzeichnet, daß in der Durchlaßöffnung (33) zumindest ein Förderflügel (34) für die Verunreinigungen angeordnet ist. (Fig.4)

7. Filtervorrichtung nach Anspruch 6, dadurch gekennzeichnet, daß der Förderflügel (34) mit scharfen, auf die Verunreinigungen einwirkenden Kanten (35) versehen ist. (Fig.5)

8. Filtervorrichtung nach einem der Ansprüche 1 bis 7, dadurch gekennzeichnet, daß zumindest eine Filterscheibe (5,6) als, vorzugsweise kreis- oder kreisringförmiges Lochblech (95) mit Feinlöchern ausgebildet ist und von einer Stützlochplatte (96) abgestützt ist.

9. Filtervorrichtung nach Anspruch 8, dadurch gekennzeichnet, daß das Lochblech (95) mit laserstrahl- oder elektronenstrahlgebohrten Feinlöchern ausgebildet sind, welche konusförmig ausgeführt sind, wobei sich diese Löcher zur Stützlochplattenseite hin erweitern.

10. Filtervorrichtung nach einem der Ansprüche 1 bis 9, dadurch gekennzeichnet, daß zumindest ein Abfuhrkanal (22) für die Verunreinigungen mit Heiz- und bzw. oder Kühleinrichtungen (59 bzw. 60) versehen ist.

11. Filtervorrichtung nach einem der Ansprüche 1 bis 10, dadurch gekennzeichnet, daß zumindest eine Filterscheibe (5,6) kegelig bzw. konisch ausgebildet ist, wobei der Neigungswinkel in Bezug auf eine ebene Fläche nicht mehr als 5°, insbesondere weniger als 3° beträgt.

12. Filtervorrichtung nach einem der Ansprüche 1 bis 11, dadurch gekennzeichnet, daß die Schabkanten (14) entlang von Spiralbahnen zum Mittenbereich des Schabers (8) verlaufen.

13. Filtervorrichtung nach einem der Ansprüche 1 bis 12, dadurch gekennzeichnet, daß die Schaberelemente (10) von Blechwinkeln gebildet sind, die mit jeweils einem Schenkel (11) an einem gemeinsamen Schaberkörper (12) befestigt sind und mit dem anderen, die Schabkante (14) bildenden Schenkel (13) federnd an der Filterscheibe (5,6) anliegen.

14. Filtervorrichtung nach einem der Ansprüche 1 bis 12, dadurch gekennzeichnet, daß jedes Schaberelement (10) mit zumindest zwei Bolzen (72) an einem Schaberträger (12) befestigt ist, wobei diese Bolzen (72) in zugehörige Bohrungen (73) mit Spiel eingreifen, und daß jedes Schaberelement (10) an seiner der Filterscheibe (5 bzw. 6) zugewendeten Seite mit einer vorspringenden Schaberleiste (69) versehen ist.

15. Filtervorrichtung nach Anspruch 14, dadurch gekennzeichnet, daß die Schaberleiste (76) an der vorlaufenden Seite des Schaberelementes (10) angeordnet ist.

16. Filtervorrichtung nach Anspruch 14 oder 15, dadurch gekennzeichnet, daß die Schaberleiste (76) über eine abgerundete Hohlkehle (78) in eine ebene, der Filterscheibe (5 bzw. 6) zugewendete Oberflächenpartie (80) des Schaberelementes (10) übergeht.

17. Filtervorrichtung nach einem der Ansprüche 1 bis 16, dadurch gekennzeichnet, daß ein die Schaberelemente (10) tragender Schaberträger (12) mit von seinem Umfang (61) ausgehenden Aussparungen (65) zwischen den Schaberelementen (10) versehen ist, wobei die Ränder (66) dieser Aussparungen (65) zumindest abschnittsweise mit auf das zugeführte Material einwirkenden Schneiden (67) versehen sind.

18. Filtervorrichtung nach Anspruch 17, dadurch gekennzeichnet, daß der Schaberträger (12) mit zusätzlichen Durchbrechungen (68) zwischen den Aussparungen (65) und zumindest einer im achsnahen Bereich angeordneten Durchlaßöffnung (33) versehen ist, wobei diese Durchbrechungen (68) zumindest an ihren, in Umlaufrichtung des Schaberträgers (12) gesehen, nachlaufenden Abschnitten (70', 70'') ihrer Ränder (70) mit auf das Material einwirkenden Schneiden (69) versehen sind.

19. Filtervorrichtung nach Anspruch 18, dadurch gekennzeichnet, daß die Durchbrechungen (68), in Umlaufrichtung des Schaberträgers (12) gesehen, vorne breiter sind als hinten, wobei die schmälere, hintere Seite mit Schneiden (69) versehen ist.

20. Filtervorrichtung nach Anspruch 18 oder 19, dadurch gekennzeichnet, daß die Durchbrechungen (68) jeweils zwischen zwei bogenförmig gegen den achsnahen Bereich des Schaberträgers (12) verlaufenden Bahnen der Schaberelemente (10) liegen.

21. Filtervorrichtung nach einem der Ansprüche 18 bis 20, dadurch gekennzeichnet, daß die zwischen einander benachbarten Aussparungen (65) verbleibenden Stege (71) an ihren Außenrändern auf das Material einwirkende Messer tragen, deren Schneiden (85) vorzugsweise parallel zur Achse des Schaberträgers (12) verlaufen und seitlich über seine Oberfläche (86) vorstehen, jedoch hinter den Schaberelementen (10) zurückstehen.

## Claims

1. A filter device for fluids, in particular for thermoplastic fluid of plastics material, with continuous cleaning of the filter face, with a casing (2) for a stationary, essentially flat metallic filter (1), to which the fluid to be filtered is conveyed through at least one inflow duct (19) and from which the cleaned fluid is removed from the casing (2) through at least one outflow duct (28), wherein at least one scraper (8) is provided which is constructed with a plurality of scraping edges (14) situated in a common plane and following curved paths and for the rotation of which at least one drive (9') is provided, so that the scraper (8) passes over the face of the filter (1) on the inflow side and wipes off the dirt adhering thereto and conveys it to the centre of the filter (1), from where the dirt is removed by means of at least one screw conveyor (23, 24) through at least one removal duct (22) starting from the said centre of the filter (1) and leading out of the casing (2), **characterized in that** the filter (1) is formed by at least two filter discs (5, 6) which are arranged parallel to each other and at a distance from each other and between which the fluid is introduced from the inflow duct (19) at the outer periphery of the filter discs (5, 6) and between which the scraper (8) acting upon the two filter discs (5, 6) is arranged, wherein each scraping edge (14) of the scraper (8) is formed by a plurality of scraper members (10) separate from one another but arranged along the paths and pressed against the filter discs (5, 6), and wherein collecting chambers (26) for the cleaned fluid are provided on the sides of the filter discs (5, 6) facing away from each other, the collecting chambers (26) being connected to the outflow duct (28) in the region of the outer periphery of the filter discs (5, 6).

2. A filter device according to Claim 1, **characterized in that** each scraper (8) is connected in a rotationally fixed manner to a shaft (56) which is arranged coaxially with a screw conveyor (23) removing the dirt and which is connected to a drive (57) independent of the screw-conveyor drive (9'). (Fig. 8)

3. A filter device according to Claim 1 or 2, **characterized in that** two coaxial screw conveyors (23, 24) are provided, which remove the dirt in mutually opposite directions. (Figs. 1, 7)

4. A filter device according to Claim 1 or 2, **characterized in that** two screw conveyors (23, 24) arranged coaxially one in the other in a common removal duct (22) convey the dirt in the same direction to a common outlet opening (25) of the removal duct (22). (Fig. 6)

5. A filter device according to one of Claims 1 to 4, **characterized in that** at least one scraper (8) with at least one through opening (33) formed in the central area is provided for dirt. (Figs. 3, 8)

6. A filter device according to Claim 5, **characterized in that** at least one conveying vane (34) for the dirt is arranged in the through opening (33). (Fig. 4)

7. A filter device according to Claim 6, **characterized in that** the conveying vane (34) is provided with sharp edges (35) which act upon the dirt. (Fig. 5)

8. A filter device according to one of Claims 1 to 7, **characterized in that** at least one filter disc (5, 6) is constructed as a preferably circular or annular perforated metal sheet (95) with fine perforations and is supported by a supporting perforated plate (96).

9. A filter device according to Claim 8, **characterized in that** the perforated metal sheet (95) [is] formed with fine perforations which are bored by laser beams or electron beams and which are made conical, wherein the said perforations are enlarged towards the supporting perforated plate.

10. A filter device according to Claims 1 to 9, **characterized in that** at least one removal duct (22) for the dirt is provided with heating and/or cooling devices (59 and 60 respectively).

11. A filter device according to one of Claims 1 to 10, **characterized in that** at least one filter disc (5, 6) is made tapered or conical, wherein the angle of inclination with respect to a level surface amounts to not more than 5°, and in particular less than 3°.

12. A filter device according to one of Claims 1 to 11, **characterized in that** the scraping edges (14) extend along spiral paths towards the central area of the scraper (8).

13. A filter device according to one of Claims 1 to 12, **characterized in that** the scraper members (10) are formed by angled metal sheets which are secured with a respective limb (11) to a common scraper body (12) and rest resiliently against the filter disc (5, 6) with the other limb (13) which forms the scraping edge (14).

14. A filter device according to one of Claims 1 to 12, **characterized in that** each scraper member (10) is secured by at least two pins (72) to a scraper support (12), wherein the said pins (72) engage with play in associated bores (73), and each scraper member (10) is provided on its side facing the filter disc (5 and 6 respectively) with a projecting scraper strip (69).

15. A filter device according to Claim 14, **characterized in that** the scraper strip (76) is arranged on the leading side of the scraper member (10).

16. A filter device according to Claim 14 or 15, **characterized in that** the scraper strip (76) passes by way of a rounded hollow moulding (78) into a flat surface portion (80) of the scraper member (10) which faces the filter disc (5 and 6 respectively).

17. A filter device according to one of Claims 1 to 16, **characterized in that** a scraper support (12) which supports the scraper members (10) is provided with recesses (65) starting from its periphery between the scraper members (10), wherein the edges (66) of the said recesses (65) are provided at least in part with blades (67) which act upon the material conveyed.

18. A filter device according to Claim 17, **characterized in that** the scraper support (12) is provided with additional perforations (68) between the recesses (65) and at least one through opening (33) arranged in the area close to the axis, the said perforations (68) being provided at least on the trailing portions (70', 70'') of their edges - as viewed in the peripheral direction of the scraper support (12) - with blades (69) which act upon the material.

19. A filter device according to Claim 18, **characterized in that** the perforations (68) are wider in front - as viewed in the peripheral direction of the scraper support (12) - than at the rear, wherein the narrower rear side is provided with blades (69).

20. A filter device according to Claim 18 or 19, **characterized in that** the perforations (68) are each situated between two paths of the scraper members (10) extending in curves towards the area of the scraper support (12) close to the axis.

21. A filter device according to one of Claims 18 to 20, **characterized in that** the outer edges of the webs (71) remaiding between mutually adjacent recesses (65) carry knives which act upon the material and the blades (85) of which preferably extend parallel to the axis of the scraper support (12) and project laterally beyond its surface (86) but are situated behind the scraper members (10).

## Revendications

1. Dispositif filtrant pour fluides, notamment pour fluides thermoplastiques, avec nettoyage en continu de la surface filtrante, comprenant un boîtier (2) pour un filtre métallique fixe (1), essentiellement plan, auquel le fluide à filtrer est apporté par au moins un canal de flux entrant (19) et duquel le fluide épuré est évacué hors du boîtier (2) par au moins un canal de flux sortant (28), au moins un racloir (8) étant prévu, qui est réalisé avec plusieurs arêtes de raclage (14) situées dans un plan commun et suivant des trajectoires courbes et pour la rotation duquel au moins un entraînement (9') est présent, de sorte que le racloir (8) passe sur la face du filtre (1) située du côté du flux entrant, enlève les impuretés qui y adhérent et les transporte vers le centre du filtre (1), d'où les impuretés sont évacuées, au moyen d'au moins une vis sans fin (23, 24), par le canal d'évacuation (22) qui part de là et mène hors du boîtier (2), **caractérisé** en ce que le filtre (1) est formé par au moins deux disques de filtre (5, 6) disposés en parallèle et à distance entre eux, entre lesquels le fluide est introduit par le canal de flux entrant (19) sur la périphérie extérieure des disques de filtre (5, 6) et entre lesquels est disposé le racloir (8) agissant sur les deux disques de filtre (5, 6), chaque arête de raclage (14) du racloir (8) étant formée par plusieurs éléments de racloir (10) séparés les uns des autres, mais disposés le long desdites trajectoires et pressés contre les disques de filtre (5, 6), et des chambres collectrices (26) pour le fluide épuré étant prévues sur les côtés mutuellement opposés des disques de filtre (5, 6), chambres qui sont reliées au canal de flux sortant (28) dans la région de la périphérie extérieure des disques de filtre (5, 6).

2. Dispositif filtrant selon la revendication 1, **caractérisé** en ce que chaque racloir (8) est lié en rotation à un arbre (56), qui est disposé coaxialement à une vis sans fin (23) évacuant les impuretés et est relié à un entraînement (57) indépendant de l'entraînement de vis sans fin (9'). (Figure 8).

3. Dispositif filtrant selon la revendication 1 ou 2, **caractérisé** en ce que deux vis sans fin coaxiales (23, 24) sont présentes, qui évacuent les impuretés vers des côtés mutuellement opposés. (Figures 1, 7).

4. Dispositif filtrant selon la revendication 1 ou 2, **caractérisé** en ce que deux vis sans fin (23, 24), disposées coaxialement l'une dans l'autre dans un canal d'évacuation commun (22), évacuent les impuretés du même côté vers une ouverture de sortie commune (25) du canal d'évacuation (22). (Figure 6).

5. Dispositif filtrant selon une des revendications 1 à 4, **caractérisé** en ce qu'au moins un racloir (8) est pourvu d'au moins une ouverture de passage (33) pour les impuretés, disposée dans sa région centrale. (Figures 3, 8).

6. Dispositif filtrant selon la revendication 5, **caractérisé** en ce qu'au moins une ailette transporteuse (34) pour les impuretés est disposée dans l'ouverture de passage (33). (Figure 4).

7. Dispositif filtrant selon la revendication 6, **caractérisé** en ce que l'ailette transporteuse (34) est dotée d'arêtes vives (35) agissant sur les impuretés. (Figure 5).

8. Dispositif filtrant selon une des revendications 1 à 7, **caractérisé** en ce qu'au moins un disque de filtre (5, 6) est réalisé sous la forme d'une tôle perforée (95) à trous fins, de préférence en forme de cercle ou d'anneau de cercle, et est soutenu par une plaque perforée de soutien (96).

9. Dispositif filtrant selon la revendication 8, **caractérisé** en ce que la tôle perforée (95) est dotée de trous fins, percés par faisceau laser ou par faisceau électronique, qui sont réalisés de forme conique, ces trous s'élargissant vers le côté où se trouve la plaque perforée de soutien.

10. Dispositif filtrant selon une des revendications 1 à 9, **caractérisé** en ce qu'au moins un canal d'évacuation (22) pour les impuretés est pourvu de dispositifs de chauffage et/ou de refroidissement (respectivement 59, 60).

11. Dispositif filtrant selon une des revendications 1 à 10, **caractérisé** en ce qu'au moins un disque de filtre (5, 6) est réalisé conoïde ou encore conique, l'angle d'inclinaison par rapport à une surface plane n'étant pas supérieur à 5°, notamment inférieur à 3°.

12. Dispositif filtrant selon une des revendications 1 à 11, **caractérisé** en ce que les arêtes de raclage (14) s'étendent le long de trajectoires spirales vers la région centrale du racloir (8).

13. Dispositif filtrant selon une des revendications 1 à 12, **caractérisé** en ce que les éléments de racloir (10) sont formés par des cornières en tôle, qui sont fixées par une branche respective (11) sur un corps de racloir commun (12) et qui, par l'autre branche (13) formant l'arête de raclage (14), s'appliquent élastiquement contre le disque de filtre (5, 6).

14. Dispositif filtrant selon une des revendications 1 à 12, **caractérisé** en ce que chaque élément de racloir (10) est fixé par au moins deux boulons (72) sur un porte-racloir (12), ces boulons (72) s'engageant avec jeu dans des perçages associés (73), et en ce que chaque élément de racloir (10) est pourvu, sur son côté tourné vers le disque de filtre (respectivement 5 ou 6), d'une bordure de raclage (76) en saillie.

15. Dispositif filtrant selon la revendication 14, **caractérisé** en ce que la bordure de raclage (76) est disposée sur le côté antérieur de l'élément de racloir (10).

16. Dispositif filtrant selon la revendication 14 ou 15, **caractérisé** en ce que la bordure de raclage (76) se raccorde par un congé arrondi (78) à une partie de surface plane (80), tournée vers le disque de filtre (respectivement 5 ou 6), de l'élément de racloir (10).

17. Dispositif filtrant selon une des revendications 1 à 16, **caractérisé** en ce qu'un porte-racloir (12) portant les éléments de racloir (10) est pourvu, entre les éléments de racloir (10), d'évidements (65) partant de sa périphérie (61), les bords (66) de ces évidements (65) étant pourvus au moins pour partie de tranchants (67) agissant sur le matériau apporté.

18. Dispositif filtrant selon la revendication 17, **caractérisé** en ce que le porte-racloir (12) est pourvu de découpures supplémentaires (68) entre les évidements (65) et d'au moins une ouverture de passage (33) disposée dans la région proche de l'axe, ces découpures (68) étant pourvues, au moins sur les parties (70', 70'') de leurs bords (70) qui sont postérieures dans la direction de circulation du porte-racloir (12), de tranchants (69) agissant sur le matériau.

19. Dispositif filtrant selon la revendication 18, **caractérisé** en ce que les découpures (68) sont plus larges à l'avant qu'à l'arrière, considérées dans la direction de circulation du porte-racloir, le côté arrière, plus étroit, étant pourvu de tranchants (69).

20. Dispositif filtrant selon la revendication 18 ou 19, **caractérisé** en ce que les découpures (68) se trouvent chaque fois entre deux trajectoires des éléments de racloir (10) qui s'étendent en arc vers la région proche de l'axe du porte-racloir (12).

21. Dispositif filtrant selon une des revendications 18 à 20, **caractérisé** en ce que les nervures (71) restantes entre des évidements (65) mutuellement voisins portent sur leurs bords extérieurs des couteaux agissant sur le matériau, dont les tranchants (85) s'étendent de préférence parallèlement à l'axe du porte-racloir (12) et dépassent latéralement de sa surface (86), mais se trouvent en arrière des éléments de racloir (10).
